# EUROPEAN PATENT APPLICATION

(11) **EP 4 588 622 A1**
(43) Date of publication of application: **23.07.2025**
(21) Application number: 24153058.3
(22) Date of filing: 22.01.2024
(51) Int. Cl.: B25J 5/02, B25J 9/08, B65G 1/04

(54) **A ROBOTIC VEHICLE**

(71) Applicant: AUTOSTORE TECHNOLOGY AS, 5578 Nedre Vats (NO)
(72) Inventor: STROMME, Erik, 5578 Nedre Vats (NO)
(74) Representative: Kilburn & Strode LLP

(57) **Abstract**

The disclosure relates to robotic vehicle comprising a body and a terminal accessible from an outer surface of the robotic vehicle, the terminal being configured to connect to an external module, wherein the terminal is configured to enable power transfer from the robotic vehicle to the external module.

## Description

### TECHNICAL FIELD

The disclosure relates to a robotic (container-handling) vehicle. More particularly, it relates to a robotic vehicle configured to connect to an external module to enable power transfer from the robotic vehicle to the external module.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked, and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

In some instances, an automated storage and retrieval system may need specific functionalities, such as for providing cleaning, maintenance or monitoring of the system. In order to provide such functionalities, a number of specialised robotic container-handling vehicles with specialised functionalities (such as cameras, vacuum cleaners, or general cleaning devices, etc.) may be used, and may be controlled by a control system. Typically, such vehicles are specifically made for their specialised functionality.

Known specialised robotic container-handling vehicles are generally expensive and, in some cases, are only occasionally put to use. Said specialised robotic container-handling vehicle may take up space in the automated storage and retrieval system when not in use and decrease the overall efficiency of the system.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5A shows a side view of an embodiment of the first robotic container-handling vehicle of Fig. 3A suitable for use in the system of Fig. 1; and
Fig. 5B shows a perspective side view of an embodiment of the second robotic container-handling vehicle of Fig. 3B suitable for use in the system of Fig. 1.

### DETAILED DESCRIPTION

In overview, the disclosure relates to a robotic container-handling vehicle (or robot) having a connection terminal configured to connect to an external module to enable a transfer of signals from and/or to the external module, the external module having a specialised functionality. By having a means of connection from the robot to the external module having a specialised functionality, each robot in a system can be manufactured in the same way with the same features and parts without the requirement of manufacturing a robot having a specialised functionality, thereby reducing the cost and complexity of manufacture. Robots with a specialised functionality also need custom power banks and to be stored in the grid when not in use so by reducing or removing the need to implement robots with a specialised functionality, the complexity of the system is further reduced. In this manner, each robot can be used normally in the system at any given time and any robots connected to an external module can be used for the specialised functionality of the external module when required which streamlines the system and ensures that every robot can be used at any given time. In addition, any external module can be connected to any robot in the system.

### Automated storage and retrieval system overview

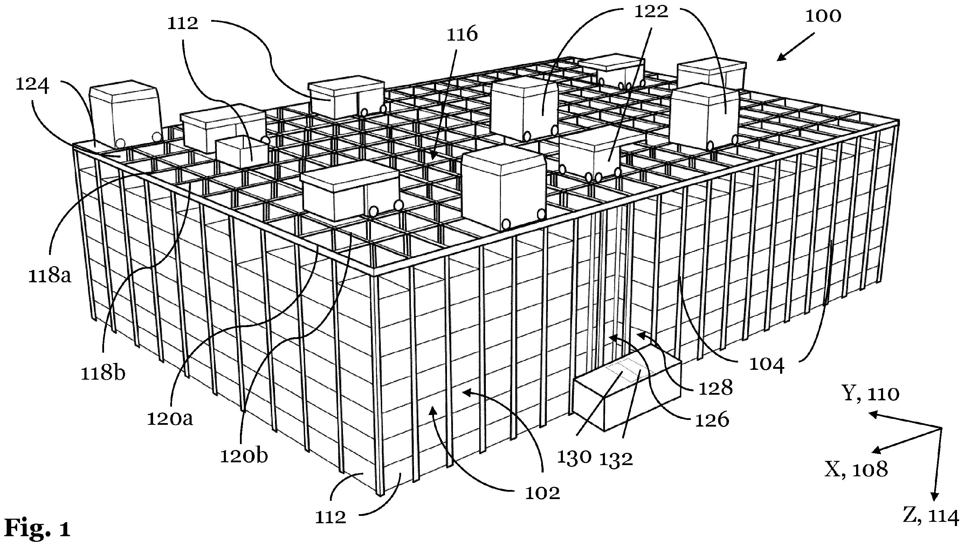

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape, and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts, or robots.

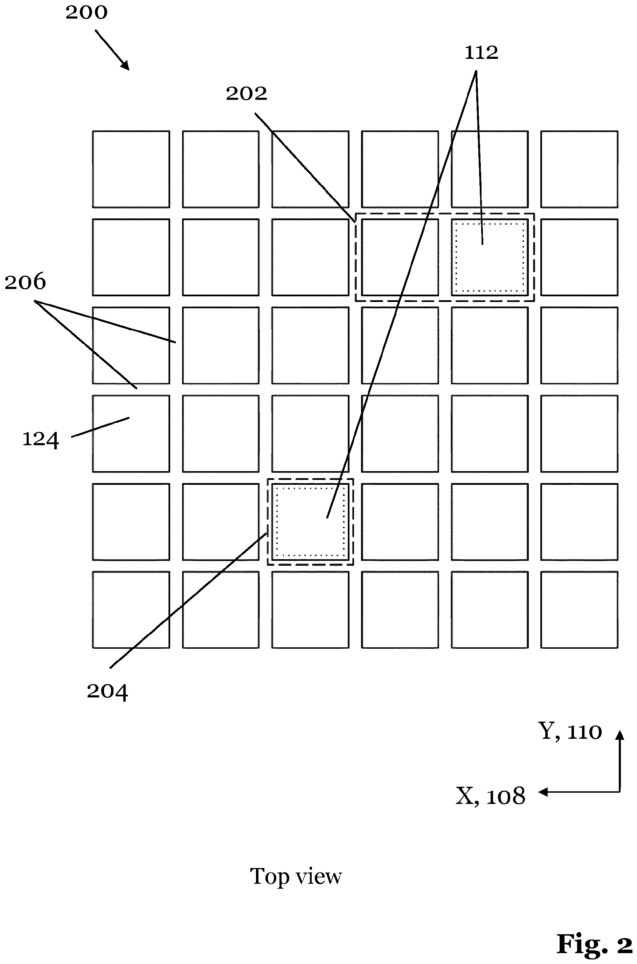

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

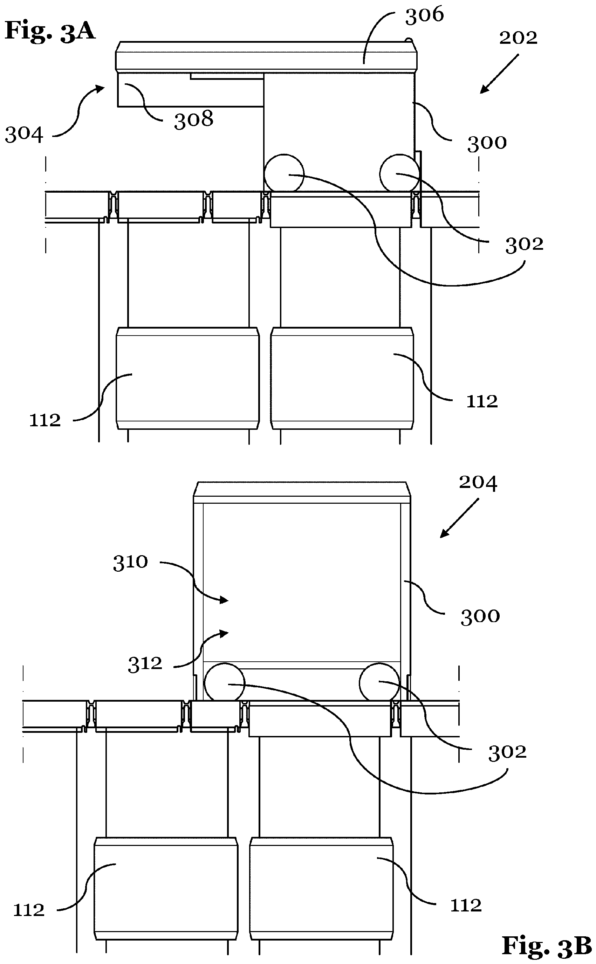

A first, 'cantilever' type of robot 202 is shown in more detail in Fig. 3A and includes a body 300, a set of wheels 302 and a lifting device 304. The body 300 contains operational equipment (not shown) for the robot 202 including drive, power, and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

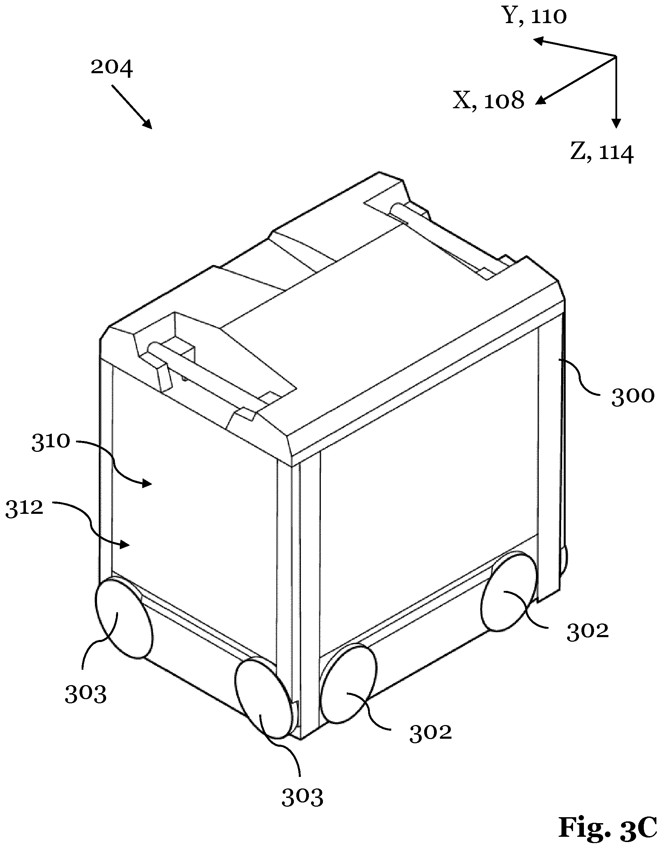

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

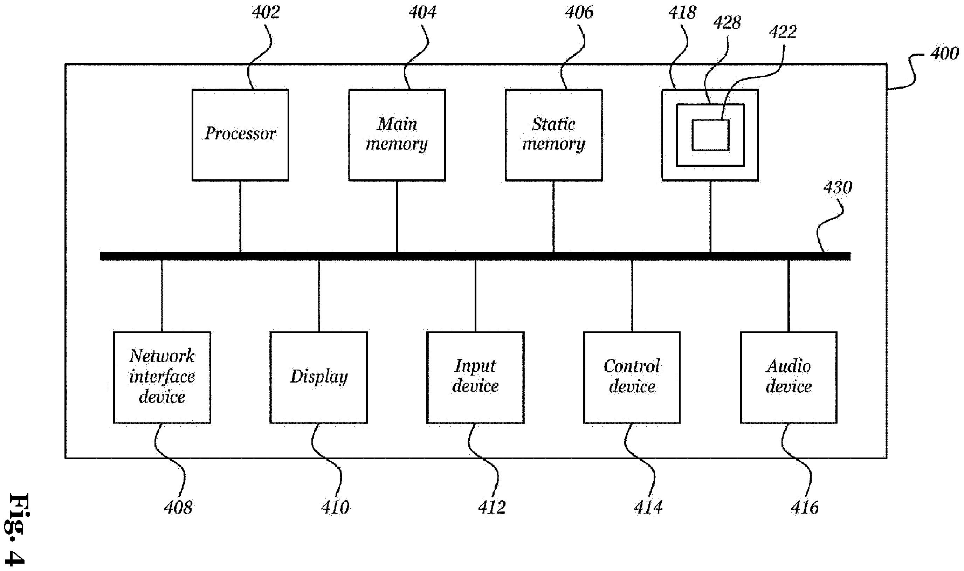

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code, or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips, and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned, if necessary, as discussed above.

### Robot with a terminal

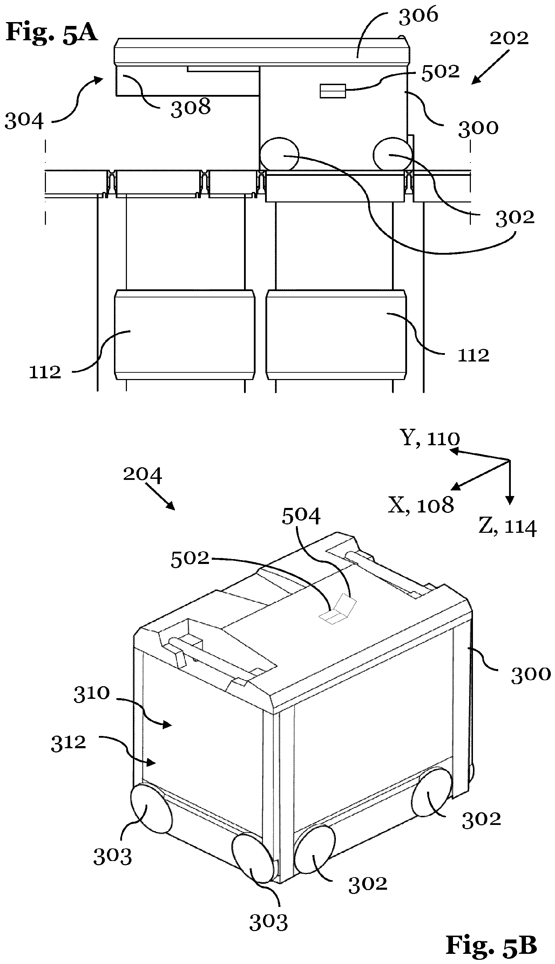

Fig. 5A shows a side view of an embodiment of the first robotic container-handling vehicle (or robotic vehicle or robot) 202 of Fig. 3A having a terminal 502 accessible from an outer surface. As described above, the robot 202 is configured to retrieve, return, and/or rearrange goods stored within a storage grid 100. The robot 202 relating to the present embodiment comprises at least a body 300 and a terminal 502 accessible from an outer surface of the robot 202 and configured to connect to an external module. The terminal 502 is configured to enable power transfer from the robot 202 to the external module. The terminal 502 is more specifically accessible from an outer surface of the body 300.

Fig. 5A shows a cantilever type robot 202 (also referred to as a cantilever robot 202) with the aforementioned terminal 502. Although in Fig. 5A, the terminal 502 is shown to be accessible from a side surface of the robot 202, it is to be understood that the disclosure is not limited thereto. For example, the terminal 502 may be accessible from a top surface, a bottom surface, or any other side surface of the robot 202 or body 300 of the robot 202. Moreover, although Fig. 5A depicts a single terminal 502, it is to be understood that this is merely exemplary - the robot 202 may comprise any number of terminals 502. The terminal 502 may also be implemented on an internal cavity type robot 204 (also referred to as an internal cavity robot 204), as shown in Fig. 5B as a perspective side view of an embodiment of the second robotic container-handling vehicle (or robotic vehicle or robot) 204 of Fig. 3B having a terminal 502 accessible from an outer surface. In Fig. 5B, the terminal 502 is shown to be accessible from a top surface of the robot 204, although it is to be understood that the disclosure is not limited to this and the terminal 502 may be accessible from a bottom surface or any side surface of the robot 204 or body 300 of the robot 204. The description of the terminal 502 relating to the cantilever robot 202 of Fig. 5A equally applies to the terminal 502 of the internal cavity robot 204 of Fig. 5B. The terminal 502 may be accessible from any type of robot, such as robot 202 or robot 204.

Although in both Figs. 5A and 5B only one terminal 502 is depicted, it is to be understood that this is merely exemplary, and there may be any number of terminals 502 accessible from one or more surfaces (e.g., top, bottom, front back, left side, right side etc.) of the robot 202, 204. That is, a plurality of terminals 502 may be accessible from different surfaces of the robot 202, a same surface of the robot 202, or any combination of thereof. The one or more terminals 502 or may be accessible from any combination of the top surface, the bottom surface or side surfaces of the robot 202 or body 300 of the robot 202. The terminal 502 may also be described as a connection means 502 or a socket 502. The one or more terminals 502 may be any size and/or configuration and is/are not limited to the size and configuration of the terminal 502 as depicted in Figs. 5A and 5B.

The terminal 502 may be assessable from and on the outer surface of the robot 202 or the body 300 of the robot 202 as shown in Fig. 5A with no lid or may be enclosable by a lid 504 and accessible from the outer surface of the robot 204 or the body 300 of the robot 204 as shown in Fig. 5B. In this manner, the robot 204 (or robot 202) further comprises a lid on the outer surface of the robot 204 (or robot 202). The lid is arranged to provide access to the terminal. More specifically, the lid is on the outer surface of the body of the robot 204 (or robot 202). The presence of a lid 504 removably covering terminal 502 is not specific to the type of robot 202, 204 and may be implemented in any way described herein on any robot described herein. That is, a cantilever robot 202 may be provided with a terminal 502 either with or without a lid 504 arranged to removably cover the terminal 502. Similarly, an internal cavity robot 204 may be provided with a terminal 502 either with or without a lid 504 arranged to removably cover the terminal 502. The lid 504 may comprise a fastening means, such as one or more mounting holes, slots, grooves, openings, or the like. The lid may be (e.g., removably) attached to the outer surface of the robot 204 (or robot 202) or the body 300 of the robot 204 (or robot 202) by any fastening means, such as the one or more mounting holes, slots, grooves and/or openings with one or more screws, bolts, fasteners, nails, and the like. The lid 504 may be connected to the outer surface of the robot 204 (or robot 202) or the body 300 of the robot 204 (or robot 202) by a hinge or any connection means. The lid 504 may be fully or partially removeable or releasable from the robot 204. The lid 504 may be a hatch which may be manually or automatically opened or removed to enable access to the terminal 502. There may be one or more terminals 502 accessible via the lid 504 or the hatch.

The terminal 502 may be arranged to be manually connected to and/or disconnected from the external module. For example, the body 300 may comprise fastening means, such as one or more mounting holes arranged for removably attaching an external module, or a connection means for connecting the external module to the robot 202, 204. The arrangement of the one or more mounting holes may allow for access to the terminal 502. More specifically, the body 300 may comprise fastening means, such as one or more mounting holes, slots, grooves, openings, and/or the like. In some embodiments, the fastening means (e.g., one or more mounting holes, etc.) comprised by the body 300 may be different from the fastening means (e.g., one or more mounting holes, etc.), comprised by the lid 504. In other embodiments, the fastening means (e.g., one or more mounting holes, etc.) comprised by the body 300 may be the same as the one or more mounting holes, etc., comprised by the lid 504. That is, the same mounting holes (for example) used to removably secure the lid 504 to the body 300 to cover the terminal (e.g., to protect the terminal from dust or damage when the terminal is not in use) may be used to removably secure an external module to the body 300 when the lid 504 is removed. The external module may be (e.g., removably) attached to the body 300 or the outer surface of the robot 202 by fastening means (e.g., the one or more mounting holes, slots, grooves, and/or openings with one or more screws, bolts, fasteners, nails, and/or the like. The terminal 502 may be configured to connect to the external module via a plug-and-socket configuration, a wire configured to connect the terminal 502 to the external module, or a wireless connection where the power transfer or any other signal transfer is enabled wirelessly. In any case, the external module may be connected (e.g., screwed) to the robot 202 and the terminal 502 is configured to enable this connection, which may comprise a power signal or any other signal transfer, from the robot 202 to the external module.

The terminal 502 may be configured to automatically connect to and disconnect from the external module. In this manner, the system may comprise a connecting means to automatically attach (and similarly disengage) the external module to the terminal 502 without manual input e.g., from a user.

In some embodiments, the terminal 502 may be configured to be permanently connected to the external module and this may be implemented during installation of the system.

The robot 202 may further comprise the operational equipment (or vehicle operational equipment) described with reference to Fig. 3A or may more broadly comprise a drive (or drive system) and a control system. The drive may comprise at least one vehicle drive signal and the control system may comprise at least one vehicle control signal. The terminal 502 may be configured to enable vehicle control signal transfer, e.g., transfer of the vehicle control signal from the robot 202 to the external module. The terminal 502 may be configured to enable vehicle drive signal transfer or transfer of the vehicle drive signal from the robot 202 to the external module.

In some embodiments, the terminal 502 may be configured to transmit power unidirectionally from the robot 202 to the external module. In some embodiments, the terminal 502 may be limited to power transmission. In one example, the robot 202 may power the external module to enable a specialized functionality of the external module. In some embodiments, the terminal 502 may be configured to receive power from the external module and/or transmit power from the robot 202 to the external module.

In some embodiments, the terminal 502 may be configured to unidirectionally transmit data to the external module. In some embodiments, the terminal 502 may be configured to receive data from the external module and/or transmit data from the robot 202 to the external module, thereby enabling bidirectional signal transfer between the robot 202 and the external module. The data may comprise at least one or more of: a drive signal, a control signal, a firmware update, or at least one instruction. There may be any combination of either unidirectional or bidirectional power transfer; and/or either unidirectional or bidirectional drive signal transfer; and/or either unidirectional or bidirectional control signal transfer; and/or either a unidirectional or bidirectional firmware update; and/or either unidirectional or bidirectional instructions. For example, the terminal 502 may be configured for unidirectional power transfer (e.g. the transfer of power from the robot 202 to the external module) only, unidirectional power transfer (e.g. the transfer of power from the robot 202 to the external module) and either unidirectional or bidirectional data (e.g. signal) transfer, bidirectional power transfer (e.g. the transfer of power to or from the robot 202, from or to the external module) only, or bidirectional power transfer and either unidirectional or bidirectional data transfer.

Regardless of whether the terminal 502 is configured to receive data from the external module and/or transmit data from the robot 202 to the external module, the data may originate at a processing system 400 (or, more generally, the system) or centrally within the system (e.g., a central system for central control of the external module) and transmitted to the robot 202 via the external module or the external module via the robot 202. In other words, data that is either transmitted from the external module to the robot 202 or from the robot 202 to the external module may originate at a processing system 400 (or, more generally, the system) or centrally within the system (e.g., a central system for central control of the external module). In this manner, data may be sent from the central system to the robot 202 via the external module, or from the central system to the external module via the robot 202. Equally, data may be sent from the robot 202 to the central system via the external module, or from the external module to the central system via the robot 202. The central system or processing system 400 may track a location of the robot 202 and whether a specialised functionality is associated with the robot 202 via, e.g., connection of an external module comprising the specialised functionality, with the robot 202. The location of the robot 202 and/or any external modules may be tracked using location processing units on either the robot 202 and/or the external module(s).

The drive signal transmitted from the robot 202 to the external module via the terminal 502 may enable or disable the external module (e.g., turn the external module on or off) to allow the operation of the specialised functionality of the external module. The control signal transmitted from the robot 202 to the external module via the terminal 502 may establish and/or maintain a connection between the robot 202 and the external module. A firmware update transmitted from the robot 202 to the external module via the terminal 502 may update the firmware of the external module. Instruction(s) transmitted from the robot 202 to the external module via the terminal 502 may instruct the external module to start or commence a functionality, the functionality may be one of a plurality of functionalities of the external module. For example, if the external module is a camera, the instruction may be one of an image capture instruction to instruct the external module to capture an image at a specific location, optionally with one or more additional parameters (such as zoom level, colour settings, angle, etc.). As another example, if the external module is a cleaning device, the instruction may be a sweeping instruction to instruct the external module to sweep the grid at a specific location. In any of the outlined examples, the data may originate at the central system and be transmitted to the external module via the robot 202.

The drive signal transmitted from the external module to the robot 202 via the terminal 502 may enable or disable the robot 202 (e.g., turn the robot 202 on or off) after a specific amount of time, e.g., if there is a reset needed for a firmware update of the robot 202. The control signal transmitted from the external module to the robot 202 via the terminal 502 may establish and/or maintain a connection between the external module and the robot 202. a firmware update transmitted from the external module to the robot 202 via the terminal 502 may update the firmware of the robot 202. Instruction(s) transmitted from the external module to the robot 202 via the terminal 502 may instruct the robot 202 to go to a specific location so the external module can perform or start a function. The function may be one of a plurality of functions for which the external module is configured to perform. For example, the robot 202 may be instructed to go to a specific location where the external module is configured to produce an image. In any of the outlined examples, the data may originate at the central system and be transmitted to the robot 202 via the external module.

The robot 202 may be configured to operate with the external module. The external module may be of any size and configuration. The external module may comprise at least one of: a camera, a cleaning device (for example, a vacuum cleaner, a steriliser, a sweeper, a scrubber, or the like), a location monitoring unit (e.g., a proximity sensor, a GPS unit, or the like), or a radar device. The robot 202 may be configured to receive module data from the external module. The module data may comprise at least one of: image data, cleaning data, location data, or radar data. For example, if the external module comprises the camera, the external module may be used to visually inspect the system from the top of the grid, which is advantageous in large systems with many columns.

The external module may comprise operational equipment (or module operational equipment). The module operational equipment may comprise a radio component, e.g., configured to transmit and/or receive radio signals. The module operational equipment may comprise at least one module control signal or system, or a plurality of module control signals or systems. The module operational equipment may comprise drive and power signals or systems. The module operational equipment may be embedded in the external module.

When the external module comprises an embedded radio, the external module can wirelessly send and receive data to the processing system 400 (or, more generally, the system). The data may comprise at least one or more of: a drive signal, a control signal, a firmware update, or at least one instruction. The system may be configured to receive data from the external module and/or transmit data from the system to the external module, thereby enabling bidirectional signal transfer between the system and the external module. The system may be configured to receive module data from the external module. The module data may comprise at least one of: image data, cleaning data, location data, radar data or the like. In an example, the terminal 502 may be configured to transmit power unidirectionally from the robot 202 to the external module. In this example, the terminal 502 may be configured not to transmit, or may not be configured to transmit, other signals or data or module data are configured to be transmitted from the robot 202 to the external module. Associated embodiments may reduce or avoid additional functionalities of the robot 202 to further reduce manufacturing complexity and/or to simplify operation.

The robot 202 may comprise a location monitoring unit configured to monitor a location of the robot 202 within a storage grid 100. The location monitoring unit may monitor one or more of a relative position within the grid 100 via, for example, a proximity sensor, or an absolute position via, for example, a GPS unit. When the robot 202 is being used in a container storage and retrieval system (or the automated storage and retrieval system described above with reference to Fig. 4) comprising a robot 202, the robot 202 is arranged to traverse the storage grid 100. A changing location of the robot 202 is configured to be monitored by the location monitoring unit. When the robot 202 is being used in a container storage and retrieval system (or the automated storage and retrieval system described above with reference to Fig. 4) comprising a plurality of robots 202, the location monitoring unit may be configured to monitor a location of each of the plurality of robots 202 relative to each other and within the storage grid 100. In this manner, it is possible to implement collision avoidance between the plurality of robots 202. The external module may also include a location monitoring unit having the same functionality as the described location monitoring unit.

Through the implementation of a robot having a terminal accessible from an outer surface and configured to connect to an external module, a user can order as many robots as required for their system and the external module may be connected to any given robot. As the external modules have specialized functionalities, the robots are enabled to use the functionality of the external module to which it is connected.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A robotic vehicle for retrieving, returning, and/or rearranging goods stored within a storage grid, the robotic vehicle comprising:
a body; and
a terminal accessible from an outer surface of the robotic vehicle configured to connect to an external module,
wherein the terminal is configured to enable power transfer from the robotic vehicle to the external module.

2. The robotic vehicle of claim 1, further comprising a lid on the outer surface of the robotic vehicle and arranged to provide access to the terminal.

3. The robot vehicle of claim 1 or claim 2, wherein the body comprises one or more mounting holes arranged to removably couple the external module.

4. The robotic vehicle of any preceding claim, wherein the terminal is arranged to be manually connected to and disconnected from the external module.

5. The robotic vehicle of any preceding claim, wherein the terminal is configured to automatically connect to and disconnect from the external module.

6. The robotic vehicle of any preceding claim, further comprising vehicle operational equipment, the vehicle operational equipment comprising:
a drive; and
a control system comprising at least one vehicle control signal.

7. The robotic vehicle of any preceding claim, wherein the terminal is configured to enable vehicle control signal transfer from the robotic vehicle to the external module.

8. The robotic vehicle of any preceding claim, wherein the robotic vehicle is configured to operate with the external module, the external module comprising at least one of: a camera, a cleaning device, a location monitoring unit, or a radar device.

9. The robotic vehicle of any preceding claim, further comprising a location monitoring unit.

10. The robotic vehicle of any preceding claim, wherein the robotic vehicle is configured to operate with the external module, the external module comprising module operational equipment comprising at least one module control signal.

11. The robotic vehicle of any preceding claim, wherein the terminal is configured to transmit power unidirectionally from the robotic vehicle to the external module.

12. The robotic vehicle of any preceding claim, wherein the terminal is configured to receive data from the external module and/or transmit data from the robotic vehicle to the external module.

13. The robotic vehicle of claim 12, wherein the data comprises at least one of: a drive signal, a control signal, a firmware update, or at least one instruction.

14. The robotic vehicle of any preceding claim, wherein the robotic vehicle is one of a cantilever robot or an internal cavity robot.

15. A container storage and retrieval system including the storage grid and the robotic vehicle of claims 1 to 14 arranged to traverse the storage grid.
